# EUROPÄISCHE PATENTSCHRIFT

(11) **EP 3 678 907 B1**
(45) Veröffentlichungstag und Bekanntmachung des Hinweises auf die Patenterteilung: **07.06.2023**
(21) Anmeldenummer: 18737815.3
(22) Anmeldetag: 21.06.2018
(51) Int. Cl.: B60T 11/26, B60T 13/14, B60T 17/06, F16B 21/07, F17C 13/08

(54) **FLUIDBEHÄLTER MIT EINER LÖSBAREN VERBINDUNG MIT EINER FAHRZEUGKOMPONENTE**
FLUID RESERVOIR WITH A RELEASABLE CONNECTION TO A VEHICLE COMPONENT
RESERVOIR DE FLUIDE AVEC UNE CONNEXION DÉTACHABLE À UN COMPOSANT DU VÉHICULE

(30) Priorität: 07.09.2017 DE 102017215833
(43) Veröffentlichungstag der Anmeldung: 15.07.2020
(73) Patentinhaber: Continental Automotive Technologies GmbH, 30165 Hannover (DE)
(72) Erfinder: RÜFFER, Manfred, 65843 Sulzbach (DE); KRÄMER, Horst, 65462 Ginsheim-Gustavsburg (DE); MERTZ, Kerima, 69488 Birkenau (DE); JAGOS, Milan, 506 01 Jicin (CZ); WIEBE, Paul, 64331 Weiterstadt (DE)
(74) Vertreter: Continental Corporation
(86) Internationale Anmeldenummer: PCT/EP2018/066526
(87) Internationale Veröffentlichungsnummer: WO 2019/048103

(56) Entgegenhaltungen:
- EP-A2- 0 994 262
- DE-A1- 10 217 682
- DE-A1-102007 041 500
- JP-A- 2003 335 236
- US-A- 5 580 204
- US-A- 5 946 914
- US-A1- 2016 123 363

## Beschreibung

Die Erfindung betrifft einen Fluidbehälter mit Merkmalen nach dem Oberbegriff des Anspruchs 1. Derartige Fluidbehälter werden beispielsweise als Druckmittelbehälter für hydraulische Kraftfahrzeug-Bremsanlagen eingesetzt, wo sie sowohl zur Versorgung von klassischen, an eine gesonderte Verstärkerstufe angekoppelten Hauptbremszylindern als auch kombinierten, die Verstärkerstufe integrativ enthaltenden Druckerzeugungsaggregaten dienen.

Gattungsgemäße Fluidbehälter werden unmittelbar an dem hydraulischen Aggregat befestigt. Zur Sicherung des Fluidbehälters in seiner vorgesehenen Lage am Aggregat ist es bekannt einen Arretierungsstift zu verwenden, welcher durch fluchtende Öffnungen an dem Behälter und der Fahrzeugkomponente gesteckt ist. Für eine vereinfachte Montage ist es zudem erforderlich, dass die Montage und Sicherung des Arretierungsstiftes möglichst ohne gesonderte Werkzeuge oder Vorrichtungen mit geringen Taktzeiten erfolgt und aufwändige und störanfällige Lösungen mit Schraubgewinde, Spannhülsen und dergleichen vermieden werden.

Aus DE 10 047 325 A1 ist eine Baugruppe bekannt, bei der der der Fluidbehälter durch ein Metallstift mit einem orthogonal abgewinkelten Ansatz gesichert wird. Als Nachteil wird dabei angesehen, dass zur Verriegelung des Metallstiftes sein abgewinkelter Ansatz zwischen zwei Ferderleisten oder in einen Rasteinsatz eingebracht werden muss und hierfür in eine ganz bestimmte, eng tolerierte Lage rotiert werden soll. Diese zusätzliche Operation erschwert eine Blindmontage und erhöht den Kontrollaufwand zur Vermeidung von Fehlmontagen.

Aus EP 2 459 425 B1 ist eine Baugruppe mit einem Ausgleichsbehälter und einem Befestigungsstift aus Kunststoff bekannt, welcher durch eine einfache axiale Steckbewegung in Steckrichtung arretiert wird. Hierfür weist der Befestigungsstift einen Kopfflansch als Anschlag und darüber hinaus ein oder mehrere Rastelemente, welche kraft- oder formschlüssig mit einer der Öffnungen an den Befestigungsansätzen des Ausgleichsbehälters zusammenwirken. Nachteilig wird dabei angesehen, dass eine mehrfache Wiederverwendung des Befestigungsstiftes beispielsweise im Servicefall Aufgrund vom Verschleiß der Rastelemente nur eingeschränkt möglich ist, zudem wird die Belastbarkeit des Befestigungsstiftes bei hohen Querlasten - beispielsweise im Crashfall - als verbesserungswürdig angesehen.

Aus DE 10217682 A1 ist eine Baugruppe mit einem Behälter bekannt, welcher an einem Hauptbremszylinder mittels eines Haltenagels fixiert wird. Zur axialen Sicherung des Haltenagels sind zwei hinter dem Nagelkopf am Behälterboden ausgebildeten flachen, plattenförmigen Sicherungsvorsprünge vorgesehen. Eine einhändige Blindmontage einer solchen Verbindung ist jedoch schwierig, zudem kann bei einer mehrfachen durchgeführten Montage und Demontage die ursprüngliche Sicherungsfunktion aufgrund einer Beschädigungsgefahr der Sicherungsvorsprünge nicht mehr zuverlässig gewährleistet werden.

Es stellt sich somit eine Aufgabe, einen verbesserten Fluidbehälter vorzuschlagen, welcher auch bei hohen Belastungen und bei Verwendung von für kragenlosen Behälterstutzen zuverlässig an der Fahrzeugkomponente gesichert verbleibt, bei Rechtslenker- und Linkslenkerfahrzeugen eingesetzt werden kann und dessen Montage insbesondere Blindmontage mit Hand und maschinelle automatisierte Montage einfach sowie uneingeschränkt mehrfach, mit wiederverwendbaren Komponenten mehrfach erfolgen kann.

Die Aufgabe wird erfindungsgemäß durch Komponenten mit Merkmalskombinationen nach Hauptanspruch 1 sowie nebengeordneten Ansprüchen 6 und 12 gelöst. Unteransprüche geben weitere erfindungsgemäße Ausführungen und Weiterbildungen an.

Die Erfindung sieht vor, dass der Befestigungsansatz eine Arretierungsvorrichtung aufweist, welche fluchtend zu der jeweiligen Öffnung angeordnet ist und die Arretierungsvorrichtung wenigstes zwei elastisch federbaren Laschen umfasst, welche an einem verdickt ausgebildeten Verriegelungsabschnitt des Arretierungsstiftes rastend angreifen und hierdurch den Arretierungsstift in seiner axialen Richtung sichern. Hierdurch wird eine robuste Konstruktion ermöglicht, welche besonders einfach montierbar ist und keine gesonderte Lagepositionierung des Bauteils bei der Montage erforderlich macht. In der Fahrzeugkomponenten reicht hierfür eine einfache Durchgangsbohrung. Eine eindeutige haptische und visuelle Kontrolle über korrekten Sitz des Arretierungsstifts wird ebenso begünstigt.

Die Laschen weisen konkav, bevorzugt sphärisch ausgebildete Flächenabschnitte auf, die zur Arretierung des Arretierungsstiftes mit einem korrespondierenden, konvex ausgebildeten Flächenabschnitt des Arretierungsstiftes gleichzeitig zusammenwirken. Dadurch wird eine eindeutige wackelfreie Endpositionierung der Bauteile mit verringerten Montagekräften ermöglicht und die Bauteile mechanisch besonders robust ausgebildet werden können.

Die Servicefreundlichkeit wird ebenso erhöht, die Montage und Demontage kann sowohl ohne Werkzeug als auch automatisiert oder mit einfachen Hilfsmitteln schnell und beliebig oft durchgeführt werden.

Gemäß einer bevorzugten Ausführungsform werden am Fluidbehälter zwei Arretierungsvorrichtungen vorgesehen, die im Wesentlichen spiegelsymmetrisch gegenüberliegend angeordnet sind, so dass die Steckrichtung wahlweise umgekehrt werden kann und eine beidseitige Montage jederzeit möglich ist. Hiermit kann eine günstige standardisierte Lösung realisiert werden, die bei verschiedenen Einsatzgebieten und Applikationen - beispielsweise Rechtslenker- und Linkslenkerausführungen - unverändert eingesetzt werden kann.

Die Erfindung sieht ebenso vor, dass der Arretierungsstift vorzugsweise rotationssymmetrisch aufgebaut ist und einen langgestreckten Körper mit einem vorderen Ende umfasst, das bei der Verriegelung durch die Durchstecköffnung in der Fahrzeugkomponente durchgesteckt wird und der verdickte Verriegelungsabschnitt im Wesentlichen im Bereich eines entgegengesetzten, hinteren Endes ausgebildet ist. Dadurch kann der Arretierungsstift besonders einfach und kostengünstig aus Metall oder Kunststoff hergestellt werden, Fehlmontagen werden zwangsweise vermieden, automatisierte Montage und eine einfache Demontage werden begünstigt und der Bauraumbedarf reduziert.

Gemäß einer vorteilhaften Weiterbildung kann der in die Steckrichtung gerichteter Flächenabschnitt des Verriegelungsabschnitts sphärisch, bevorzugt als ein Kugelsegment, besonders bevorzugt als eine Halbkugel ausgebildet werden. Damit ist ein spielfreier Zusammenbau mit besonders geringen Montagekräften und verschleiß realisierbar.

Eine bevorzugte Ausführungsform des Arretierungsstifts sieht vor, dass an der flachen Seite des Kugelsegments ein radial im Wesentlichen zum Körper gerichteter Absatz vorgesehen ist und ein Übergang zwischen dem Absatz und dem Körper abgeschrägt insbesondere kegelig ausgebildet ist. Damit werden zum einen die Auspresskraft gegen ungewollten Verlust des Arretierungsstifts und somit Verriegelungssicherheit erhöht, gleichzeitig die Herstellbarkeit mit Umformverfahren durch Verringerung von Abstufungen verbessert.

Gemäß einer anderen erfindungsgemäßen Ausführungsform kann der der Verriegelungsabschnitt als ein Kugelkopf ausgebildet sein, wodurch der Arretierungsstift besonders bauraumsparend gestaltet werden kann und zudem Demontagekraft und Verschleißanfälligkeit reduziert werden.

Gemäß einer bevorzugten Ausführungsform können der Fluidbehälter als ein Bremsflüssigkeitsbehälter und die Fahrzeugkomponente als ein Hydraulikaggregat zur Erzeugung vom hydraulischen Bremsdruck, insbesondere ein Hauptbremszylinder, für eine hydraulische Kraftfahrzeugbremsanlage vorgesehen sein.

Hierdurch wird ein besonders robuste und crashsicherer Aufbau der sicherheitsrelevanten Bremsbaugruppe besonders kostengünstig ermöglicht, weil hiermit beispielsweise keine Haltefunktion an die Anschlussstutzen des Fluidbehälters mehr verlagert wird und diese dadurch einfach kragenlos ausgeführt werden können. Durchmesser derartiger hydraulischer Schnittstellen können zudem dadurch reduziert werden.

Des Weiteren beansprucht die Erfindung eine Baugruppe, enthaltend einen erfindungsgemäßen Fluidbehälter und wenigstens einen erfindungsgemäßen Arretierungsstift, welche die vorgenannten Vorteile vereint.

Weitere Merkmale, Vorteile und Anwendungsmöglichkeiten der Erfindung gehen aus der nachfolgenden Beschreibung eines erfindungsgemäßen Ausführungsbeispiels hervor. Hierbei zeigen:
Fig.1 ein Ausschnitt einer Ausführungsform einer Baugruppe aus einem Hauptbremszylinder und einem darauf montierten erfindungsgemäßen Fluidbehälter und Arretierungsstift in Schnittdarstellung.
Fig.2 Schnittdarstellung eines Ausschnitts des Fluidbehälters nach Fig.1 mit zwei Arretierungsvorrichtungen.
Fig.3 Draufsicht einer Arretierungsvorrichtung nach Fig.2.
Fig.4 Vergrößerte Schnittdarstellung D-D der Arretierungsvorrichtung nach Fig.3.
Fig.5 eine erfindungsgemäße Ausführungsform des Arretierungsstiftes nach Fig.1.
Fig.6 eine zweite erfindungsgemäße Ausführungsform des Arretierungsstiftes in räumlicher Darstellung.
Fig.7 eine dritte erfindungsgemäße Ausführungsform des Arretierungsstiftes in räumlicher Darstellung.
Fig.8 Prinzipskizze eines Kraft-Wegdiagramms eine entgegen der Steckrichtung auf den Arretierungsstift wirkenden Axialkraft.

### Fig.1

Der erfindungsgemäße Fluidbehälter 1 ist in der gezeigten Ausführungsform als ein Druckmittelbehälter einer hydraulischen Kraftfahrzeug-Bremsanlage ausgebildet und unmittelbar an einem Hauptbremszylinder (Fahrzeugkomponente 2) angeordnet.

Die Verbindung zu der Fahrzeugkomponente 2 ist lösbar gestaltet und durch einen Arretierungsstift 7 gesichert, welcher uneingeschränkt oft ein- beziehungsweise ausgebaut werden kann. Hierfür weist die Fahrzeugkomponente 2 eine Durchstecköffnung 8 und der Fluidbehälter 1 zwei Befestigungsansätze 4 und 5, die beidseitig der Durchstecköffnung 8 angeordnet sind und jeweils eine mit der Durchstecköffnung 8 fluchtende Öffnung 6 beziehungsweise 7 aufweisen. Die Öffnungen 6,7 sind in axiale Richtung zylindrisch langgestreckt ausgebildet, so dass eine ausreichende Kontaktfläche mit dem Arretierungsstift 3 vorhanden ist. Dadurch wird bei höheren Querkräften eine ausrechende Festigkeit sichergestellt und insbesondere das Überschreiten der Grenzwerte für Flächenpressung des Kunststoffwerkstoffs des Fluidbehälters 1 und somit seine Schädigung vermieden.

Der Arretierungsstift 7 durchgreift die Öffnungen 6,7,8 und sichert dadurch den Fluidbehälter 1 in seiner vorgesehenen Einbaulage an der Fahrzeugkomponente 2. Zugleich ist der Arretierungsstift 7 selbst durch eine rastende Verriegelung in einer Arretierungsvorrichtung 9 am Fluidbehälter 1 in seiner Endlage gesichert. Jede Arretierungsvorrichtung 9, 10 ist jeweils einer der Öffnungen 6 beziehungsweise 7 zugeordnet und zu dieser fluchtend eingerichtet.

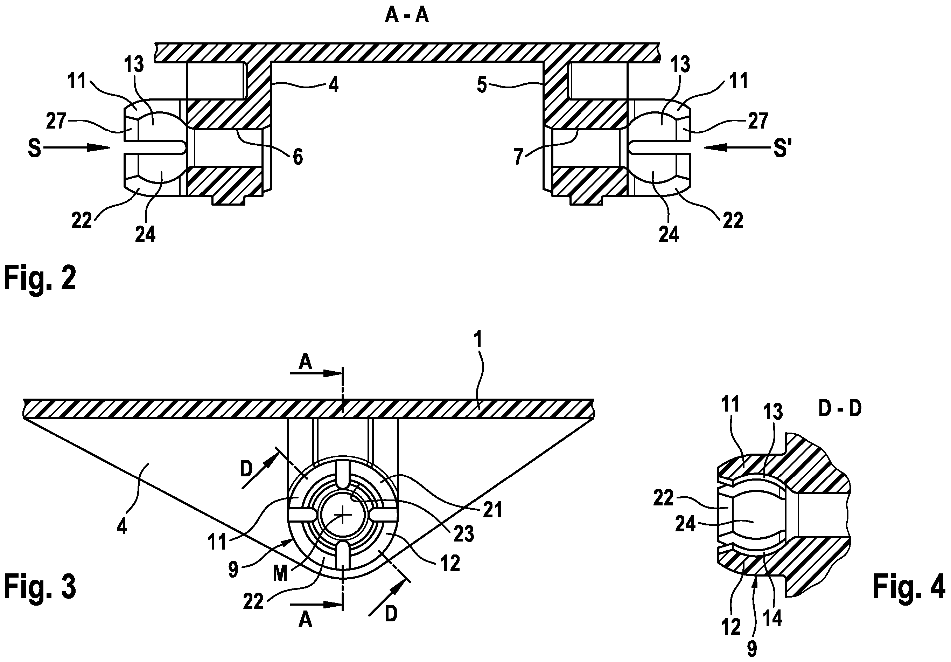

Wie insbesondere aus den nachfolgenden Figuren 2-4 zu entnehmen weisen die Arretierungsvorrichtungen 9,10 in der gezeigten Ausführungsform jeweils 4 elastisch federnden Laschen 11,12,21,22 auf.

Eine abweichende Anzahl der Laschen ist innerhalb der Erfindung jederzeit zulässig. Die Anzahl von 3 oder 4 Laschen pro Arretierungsvorrichtung wird jedoch als besonders bevorzugt angesehen, weil damit ein optimaler Kompromiss zwischen Herstellaufwand, Montagektaft, Haltekraft und Sicherung des Arretierungsstiftes 3 auch bei Funktionsverlust (beispielsweise Bruch) einer oder gar zweier Laschen besonders einfach erreichbar ist.

Jede Lasche 11,12, 21,22 verfügt unter Bildung eines axialen Hinterschnitts jeweils über einen radial nach innen gerichteten jeweils sphärisch konkav ausgebildeten Flächenabschnitt 13,14, 23,24. Die vorgenannten Flächenabschnitte 13,14, 23,24 umgreifen einen verdickt ausgebildeten Verriegelungsabschnitt 18 des Arretierungsstiftes 3 und fixieren diesen in axiale Richtung durch die radiale Vorspannung und axialen Hinterschnitt kraft- und formschlüssig.

Der verdickte Verriegelungsabschnitt 18 des Arretierungsstiftes 3 verfügt über einen in die Steckrichtung S gerichteten konvex ausgebildeten Flächenabschnitt 15, welcher mit den Flächenabschnitten 13,14, 23,24 und so die axialen Anschlag und Endlage des Arretierungsstiftes im Zusammenbau definiert.

Eine Abweichung von der sphärischen zu einer anderen konkaven Oberfläche der Flächenabschnitte 13,14, 23,24 (beziehungsweise korrespondierend konvexen Flächenabschnitts 15 des Arretierungsstiftes 3) ist innerhalb der Erfindung selbstverständlich zulässig.

Für die Verriegelung muss der Arretierungsstift 3 lediglich axial geradlinig in Steckrichtung S bis zum Anschlag beziehungsweise Anlage des Flächenabschnitts 15 an den Flächenabschnitte 13,14,23,24 gesteckt werden.

Für eine verbesserte Standardisierung und beidseitige Montierbarkeit sind beide Befestigungsansätze 4,5 mit identisch bedienbaren, vorzugsweise spiegelsymmetrisch oder identisch gestalteten Arretierungsvorrichtungen 9,10 ausgestattet. Hierdurch kann der gleiche Arretierungsstift 7 ohne Funktionseinschränkung beliebig von beiden Seiten gesteckt und verriegelt werden. Dabei erfolgt seine Verriegelung bei der Steckrichtung S in der Arretierungsvorrichtung 9 und bei Steckrichtung S' in der Arretierungsvorrichtung 10.

### Fig.2

Zur Verdeutlichung des vorstehend beschriebenen Aufbaus der Arretierungsvorrichtungen 9,10 wird in der Fig.2 der entsprechende Ausschnitt des Fluidbehälters 1 alleine, ohne Zusammenbau dargestellt. Es sei besonders hervorzuheben, dass durch Bildung des axialen Hinterschnitts mittels sphärisch konkav ausgeführten Flächenabschnitte 13,14,23,24 einen zuverlässigen axialen Halt des Arretierungsstiftes 3, seine eindeutige radiale Zentrierung und zugleich seine vereinfachte beschädigungslose Demontage ermöglichen. Für eine weitere Erleichterung der Montage weisen die Laschen 11,12,21,22 jeweils eine Einfuhrschräge 27 auf.

### Fig.3

Die Fig.3 zeigt eine Draufsicht (entsprechend Steckrichtung S aus Fig.3) auf den Befestigungsansatz 4 mit der daran ausgebildeten Arretierungsvorrichtung 9. Es ist erkennbar, dass jede Lasche in Umfangsrichtung gekrümmt ausgebildet ist. Bei Verwendung von mindestens zwei und vorzugsweise 3 oder 4 Laschen wird ein Verlust einer oder gar mehrerer Lache unkritisch, weil der Arretierungsstift 3 bereits durch eine einzige Lasche in seiner axialen Endlage gehalten werden kann.

### Fig.4

Die Schnittansicht D-D aus Fig.3 verdeutlicht den Aufbau der Arretierungsvorrichtung.

### Fig.5

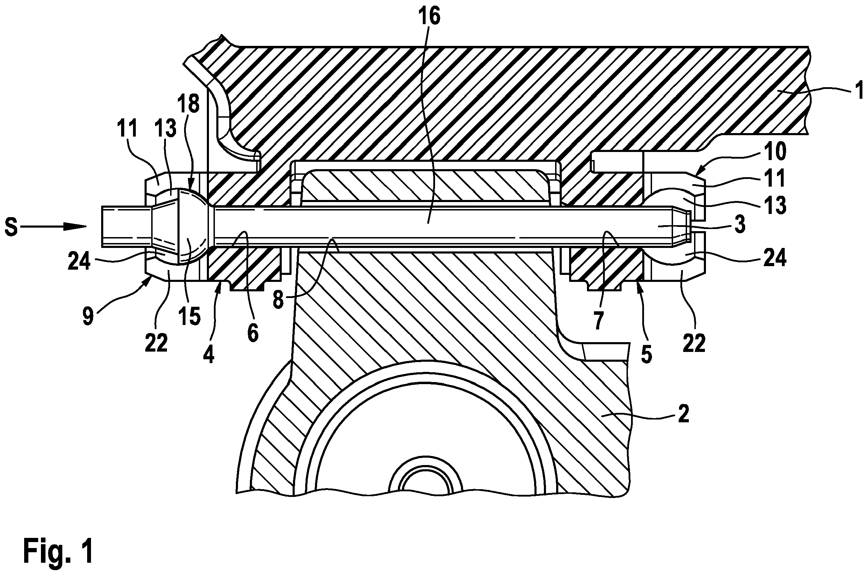

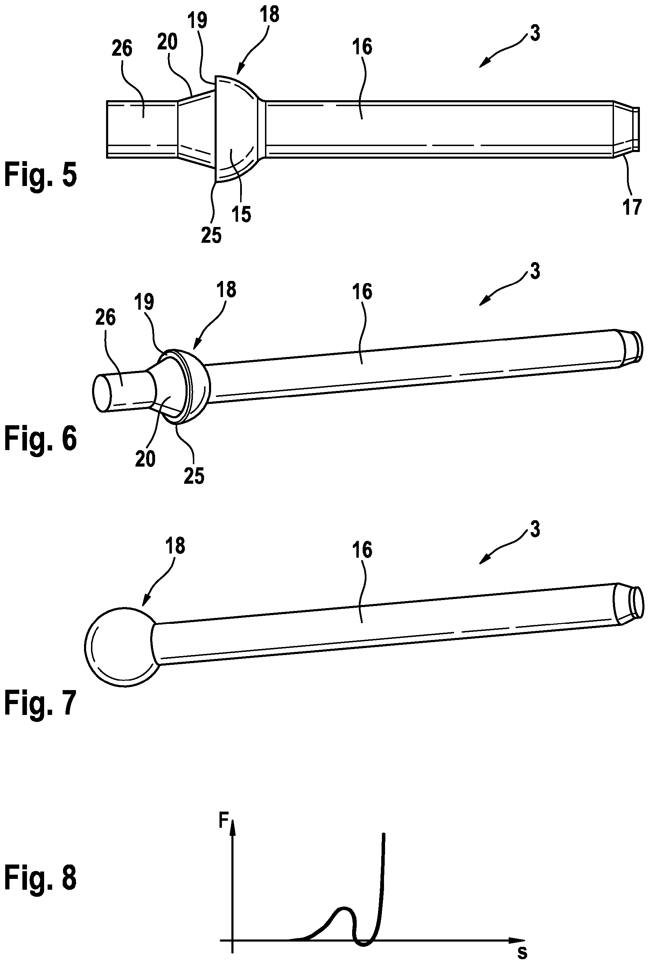

In der Fig.5 ist eine erste erfindungsgemäße Ausführungsform des Arretierungsstifts 3 gemäß Fig.1 dargestellt. Der Arretierungsstift 3 ist vorzugsweise aus einem Metallwerkstoff, insbesondere Stahl rotationssymmetrisch aufgebaut. Gewichtssparenden Kunststoffausführungen, insbesondere aus einem faserverstärkten Kunststoffwerkstoff sind innerhalb der Erfindung für geringere Lastenfälle ebenso zulässig.

Der Arretierungsstift 3 weist auf seiner Vorderseite einen langgestreckten Körper 16 mit einem abgeschrägt verjüngten vorderen Ende 17 auf, welches bei der Verriegelung durch die Durchstecköffnung 8 in der Fahrzeugkomponente 2 durchgesteckt wird. Im Wesentlichen im Bereich eines dem vorderen Ende 17 entgegengesetzten Endes ist am Körper 16 ein Verriegelungsabschnitt 18 verdickt ausgebildet, welcher in der Arretierungsvorrichtung 9,10 des Fluidbehälters 1 arretiert wir.

Ein in Steckrichtung, zum vorderen Ende 17 gerichteter Flächenabschnitt 15 des Verriegelungsabschnitts 18 ist korrespondierend zu den Flächenabschnitten 13,14,23,24 der Laschen 11,12,21,22 sphärisch konvex gestaltet, in der gezeigten Ausführung speziell als ein Kugelsegment.

An der flachen Seite des Kugelsegments ist ein radial im Wesentlichen zum Körper 16 gerichteter Absatz 19 vorgesehen. Der Absatz dient im Wesentlichen zur Erhöhung der axialen Widerstandskraft entgegen der jeweiligen Steckrichtung S,S` beziehungsweise der Auspresskraft gegen einen ungewollten Verlust des Arretierungsstifts 3 und somit zur Erhöhung der Verriegelungssicherheit.

Ein Übergang 20 zwischen dem Absatz 19 und dem Körper 16 ist abgeschrägt, insbesondere kegelig ausgebildet, wodurch eine Art Stufenkonus entsteht und insbesondere eine vereinfachte Herstellbarkeit des Arretierungsstifts 3 in Metallausführung, beispielsweise mittels Kaltumformung ermöglicht wird.

Ein langgestreckter Ansatz 26 schließt sich rückseitig an den Verriegelungsabschnitt 18 an. Der Ansatz 26 dient insbesondere zum Halten des Arretierungsstifts 3 mit fingern oder Automatengreifern für eine vereinfachte Montage, und zusätzlich als eine zuverlässige visuelle Kontrollmöglichkeit des korrekten Sitzes des Arretierungsstifts 3 im Zusammenbau.

### Fig.6

In der Fig.6 ist eine zweite erfindungsgemäße Ausführungsform des Arretierungsstifts 3 dargestellt. Im Unterschied zu der Ausführung nach Fig.5 ist die äußere radiale Kante 25 des Absatzes 19 für eine vereinfachte Demontierbarkeit verrundet gestaltet.

### Fig.7

Im Unterschied zu den Ausführungen nach Fig.5 und 6 ist bei der gezeigten dritten erfindungsgemäßen Ausführungsform des Arretierungsstifts3 der Verriegelungsabschnitt 18 als ein Kugelkopf ausgebildet und der Ansatz 26 fehlt. Eine derartige Ausführungsform kann beispielsweise bei besonders engen Bauraumverhältnissen vorteilhaft sein, ebenso bei Leitungsverlegungen in unmittelbarer Nähe der Arretierungsvorrichtung, um eine Beschädigung der Leitung durch den Ansatz 26 auszuschließen.

### Fig.8

Die Fig.8 zeigt stark vereinfacht ein Kraft-Weg-Diagramm bei Montage des Arretierungsstifts 3. Die Arretierung beziehungsweise Verriegelung des Arretierungsstifts 3 in der Arretierungsvorrichtung 9,10 erfolgt selbsttätig automatisch und ist durch einen charakteristischen Verlauf der Widerstandskraft bei der Montage eindeutig erkennbar. Hierbei entsteht bei der elastischen Aufweitung der Laschen 11,12,21,22 durch den Flächenabschnitts 15 unter Bildung einer Vorspannkraft zunächst eine erste Kraftspitze. Diese wird von einem Kraftabfall bis hin zur Beschleunigung in Steckrichtung gefolgt, wenn die Laschen 11,12,21,22 nach dem Überfahren der Einfuhrschräge 27 mit dem Verriegelungsabschnitt 18 zurückfedern. Beim Anschlagen des Flächenabschnitts 15 an den Flächenabschnitten 13,14,23,24 gelangt der Arretierungsstift 3 in seine Endlage, begleitet durch einen starken zweiten, letzten Kraftanstieg.

Hierdurch ist die Montage des Arretierungsstiftes 3 sowohl als eine rein haptisch regelbare Blindoperation als auch automatisierte kraftsensorgesteuerte Operation realisierbar.

### Bezugszeichenliste

- 1: Fluidbehälter
- 2: Fahrzeugkomponente
- 3: Arretierungsstift
- 4: Befestigungsansatz
- 5: Befestigungsansatz
- 6: Öffnung
- 7: Öffnung
- 8: Durchstecköffnung
- 9: Arretierungsvorrichtung
- 10: Arretierungsvorrichtung
- 11: Lasche
- 12: Lasche
- 13: Flächenabschnitt
- 14: Flächenabschnitt
- 15: Flächenabschnitt
- 16: Körper
- 17: Vorderes Ende
- 18: Verriegelungsabschnitt
- 19: Absatz
- 20: Übergang
- 21: Lasche
- 22: Lasche
- 23: Flächenabschnitt
- 24: Flächenabschnitt
- 25: Kante
- 26: Ansatz
- 27: Einfuhrschräge
- S: Steckrichtung
- S': Steckrichtung
- M: Mittelachse

## Patentansprüche

1. Fluidbehälter (1) zur lösbaren Verbindung mit einer Fahrzeugkomponente (2), wobei der Fluidbehälter (1) mindestens einen ersten Befestigungsansatz (4) mit einer ersten Öffnung (6) und einen zweiten Befestigungsansatz (5) mit einer zweiten Öffnung (7) aufweist, welche mit einer Durchstecköffnung (8) in der Fahrzeugkomponente (2) fluchten und die Verbindung durch einen Arretierungsstift (3) gesichert wird, welcher in die Durchstecköffnung (8) und die Öffnungen (6, 7) streckbar und durch eine geradlinige Steckbewegung in eine Steckrichtung (S) in einer Endlage verriegelbar ist, wobei an wenigstens einem der zwei Befestigungsansätze (4) eine erste Arretierungsvorrichtung (9) ausgebildet ist, welche fluchtend zu der jeweiligen Öffnung (6) angeordnet ist und die Arretierungsvorrichtung (9) wenigstes eine erste elastisch federbare Lasche (11) mit einem konkav ausgebildeten ersten Flächenabschnitt (13) und eine zweite elastisch federbare Lasche (12) mit einem konkav ausgebildeten zweiten Flächenabschnitt (14) umfasst, welche an einem verdickt ausgebildeten Verriegelungsabschnitt (18) des Arretierungsstiftes (3) rastend angreifen und hierdurch den Arretierungsstift (3) in seiner axialen Richtung sichern, **dadurch gekennzeichnet, dass** der Verriegelungsabschnitt (18) einen konvex ausgebildeten dritten Flächenabschnitt (15) aufweist, der zu dem ersten und dem zweiten Flächenabschnitt (13, 14) der Laschen (11, 12) korrespondierend ist, und zur Arretierung des Arretierungsstiftes (3) der erste und der zweite Flächenabschnitt (13,14) mit dem dritten Flächenabschnitt (15) gleichzeitig zusammenwirken.

2. Fluidbehälter (1) nach Anspruch 1, wobei die Flächenabschnitte (13,14,15) sphärisch ausgebildet sind.

3. Fluidbehälter (1) nach einem der Ansprüche 1 bis 2, wobei an einem weiteren der zwei Befestigungsansätze (5) eine zweite Arretierungsvorrichtung (10) ausgebildet ist und die Arretierungsvorrichtungen (9, 10) derart im Wesentlichen spiegelsymmetrisch gegenüberliegend gestaltet sind, dass die Steckrichtung (S) wahlweise umgekehrt werden kann.

4. Fluidbehälter (1) nach einem der Ansprüche 1 bis 3, wobei der Fluidbehälter (1) als ein Bremsflüssigkeitsbehälter für eine hydraulische Kraftfahrzeugbremsanlage ausgebildet ist.

5. Fluidbehälter (1) nach einem der Ansprüche 1 bis 4, wobei der Arretierungsstift (3) rotationssymmetrisch aufgebaut ist.

6. Arretierungsstift (3) für einen Fluidbehälter (1) nach wenigstens einem der Ansprüche 1 bis 5, wobei der Arretierungsstift (3) einen langgestreckten Körper (16) mit einem vorderen Ende (17) und einem entgegengesetzten, hinteren Ende umfasst, wobei das vordere Ende (17) bei Verriegelung durch die Durchstecköffnung (8) in der Fahrzeugkomponente (2) durchgesteckt wird und der verdickte Verriegelungsabschnitt (18) im Wesentlichen im Bereich des hinteren Endes ausgebildet ist **dadurch gekennzeichnet, dass** der verdickte Verriegelungsabschnitt (18) den konvex ausgebildeter dritten Flächenabschnitt (15) aufweist.

7. Arretierungsstift (3) nach Anspruch 6, wobei der Flächenabschnitt (15) des Verriegelungsabschnitts (18) sphärisch sowie in die Steckrichtung gerichtet ausgebildet ist.

8. Arretierungsstift (3) nach Anspruch 7, wobei der Flächenabschnitt (15) im Wesentlichen als ein Kugelsegment, insbesondere als eine Halbkugel ausgebildet ist.

9. Arretierungsstift (3) nach Anspruch 8, wobei an der flachen Seite des Kugelsegments ein radial im Wesentlichen zum Körper (16) gerichteter Absatz (19) vorgesehen ist.

10. Arretierungsstift (3) nach Anspruch 9, wobei ein Übergang (20) zwischen dem Absatz (19) und dem Körper (16) abgeschrägt insbesondere kegelig ausgebildet ist.

11. Arretierungsstift (3) nach Anspruch 6, wobei der Verriegelungsabschnitt (18) als ein Kugelkopf ausgebildet ist

12. Baugruppe enthaltend ein Fluidbehälter (1) nach wenigstens einem der Ansprüche 1 bis 5 und ein Arretierungsstift (3) nach wenigstens einem der Ansprüche 6 bis 11

13. Baugruppe nach Anspruch 12, wobei die Fahrzeugkomponente (2) ein Hydraulikaggregat zur Erzeugung vom hydraulischen Bremsdruck in einer hydraulischen Kraftfahrzeugbremsanlage, insbesondere ein Hauptbremszylinder ist.

## Claims

1. Fluid container (1) for releasable connection to a vehicle component (2), wherein the fluid container (1) has at least one first fastening lug (4) with a first opening (6) and a second fastening lug (5) with a second opening (7) which are aligned with a plug-through opening (8) in the vehicle component (2) and the connection is secured by a locking pin (3) which can be extended into the plug-through opening (8) and the openings (6, 7) and can be locked in an end position by a rectilinear plug-in movement in a plug-in direction (S), wherein a first locking device (9) is formed on at least one of the two fastening lugs (4) and is arranged in alignment with the respective opening (6) and the locking device (9) comprises at least one first elastically resilient tab (11) with a concavely formed first surface portion (13) and a second elastically resilient tab (12) with a concavely formed second surface portion (14) which act in a latching manner on a thickened locking portion (18) of the locking pin (3) and thereby secure the locking pin (3) in its axial direction, **characterized in that** the locking portion (18) has a convexly formed third surface portion (15) which corresponds to the first and the second surface portions (13, 14) of the tabs (11, 12) and, for locking the locking pin (3), the first and the second surface portions (13, 14) simultaneously interact with the third surface portion (15).

2. Fluid container (1) according to Claim 1, wherein the surface portions (13, 14, 15) are spherical.

3. Fluid container (1) according to either of Claims 1 and 2, wherein a second locking device (10) is formed on a further of the two fastening lugs (5) and the locking devices (9, 10) are designed to be substantially mirror-symmetrical opposite each other in such a manner that the plug-in direction (S) can optionally be reversed.

4. Fluid container (1) according to one of Claims 1 to 3, wherein the fluid container (1) is designed as a brake fluid container for a hydraulic motor vehicle brake system.

5. Fluid container (1) according to one of Claims 1 to 4, wherein the locking pin (3) is rotationally symmetrical.

6. Locking pin (3) for a fluid container (1) according to at least one of Claims 1 to 5, wherein the locking pin (3) comprises an elongated body (16) with a front end (17) and an opposite rear end, wherein the front end (17), for the locking, is plugged through the plug-through opening (8) in the vehicle component (2), and the thickened locking portion (18) is formed substantially in the region of the rear end, **characterized in that** the thickened locking portion (18) has the convexly formed third surface portion (15).

7. Locking pin (3) according to Claim 6, wherein the surface portion (15) of the locking portion (18) is spherical and directed in the plug-in direction.

8. Locking pin (3) according to Claim 7, wherein the surface portion (15) is substantially designed as a spherical segment, in particular a hemisphere.

9. Locking pin (3) according to Claim 8, wherein a shoulder (19) directed radially substantially with respect to the body (16) is provided on the flat side of the spherical segment.

10. Locking pin (3) according to Claim 9, wherein a transition (20) between the shoulder (19) and the body (16) is bevelled, in particular conical.

11. Locking pin (3) according to Claim 6, wherein the locking portion (18) is designed as a spherical head.

12. Assembly comprising a fluid container (1) according to at least one of Claims 1 to 5 and a locking pin (3) according to at least one of Claims 6 to 11.

13. Assembly according to Claim 12, wherein the vehicle component (2) is a hydraulic unit for generating the hydraulic brake pressure in a hydraulic motor vehicle brake system, in particular a master brake cylinder.

## Revendications

1. Réservoir de fluide (1) pour la connexion détachable à un composant de véhicule (2), le réservoir de fluide (1) présentant au moins un premier appendice de fixation (4) avec une première ouverture (6) et un deuxième appendice de fixation (5) avec une deuxième ouverture (7) qui sont alignées avec une ouverture d'enfichage (8) dans le composant de véhicule (2) et la connexion étant sécurisée par une broche de blocage (3) qui peut être étirée dans l'ouverture d'enfichage (8) et les ouvertures (6, 7) et verrouillée dans une position finale par un mouvement d'enfichage rectiligne dans une direction d'enfichage (S), un premier dispositif de blocage (9) étant réalisé sur au moins l'un des deux appendices de fixation (4), qui est agencé en alignement avec l'ouverture respective (6) et le dispositif de blocage (9) comprenant au moins une première patte élastique (11) avec une première section de surface réalisée sous forme concave (13) et une deuxième patte élastique (12) avec une deuxième section de surface réalisée sous forme concave (14), qui s'engagent par encliquetage sur une section de verrouillage (18) réalisée sous forme épaissie de la broche de blocage (3) et sécurisent ainsi la broche de blocage (3) dans sa direction axiale, **caractérisé en ce que** la section de verrouillage (18) présente une troisième section de surface réalisée sous forme convexe (15), qui correspond à la première et à la deuxième section de surface (13, 14) des pattes (11, 12), et la première et la deuxième section de surface (13, 14) coopèrent simultanément avec la troisième section de surface (15) pour bloquer la broche de blocage (3).

2. Réservoir de fluide (1) selon la revendication 1, dans lequel les sections de surface (13, 14, 15) sont réalisées sous forme sphérique.

3. Réservoir de fluide (1) selon l'une quelconque des revendications 1 à 2, dans lequel un deuxième dispositif de blocage (10) est réalisé sur un autre des deux appendices de fixation (5), et les dispositifs de blocage (9, 10) sont conçus sous forme essentiellement symétriques l'un en face de l'autre, de telle sorte que la direction d'enfichage (S) peut être inversée au choix.

4. Réservoir de fluide (1) selon l'une quelconque des revendications 1 à 3, dans lequel le réservoir de fluide (1) est réalisé sous la forme d'un réservoir de fluide de freinage pour un système de freinage hydraulique de véhicule automobile.

5. Réservoir de fluide (1) selon l'une quelconque des revendications 1 à 4, dans lequel la broche de blocage (3) est construite sous forme symétrique en rotation.

6. Broche de blocage (3) pour un réservoir de fluide (1) selon au moins l'une quelconque des revendications 1 à 5, la broche de blocage (3) comprenant un corps allongé (16) avec une extrémité avant (17) et une extrémité arrière opposée, l'extrémité avant (17) étant enfichée à travers l'ouverture d'enfichage (8) dans le composant de véhicule (2) lors du verrouillage, et la section de verrouillage épaissie (18) étant réalisée essentiellement dans la zone de l'extrémité arrière, **caractérisée en ce que** la section de verrouillage épaissie (18) présente la troisième section de surface réalisée sous forme convexe (15).

7. Broche de blocage (3) selon la revendication 6, dans laquelle la section de surface (15) de la section de verrouillage (18) est configurée sous forme sphérique et orientée dans la direction d'enfichage.

8. Broche de blocage (3) selon la revendication 7, dans laquelle la section de surface (15) est réalisée essentiellement sous la forme d'un segment sphérique, notamment sous la forme d'une demi-sphère.

9. Broche de blocage (3) selon la revendication 8, dans laquelle un épaulement (19) orienté radialement essentiellement vers le corps (16) est prévu sur le côté plat du segment sphérique.

10. Broche de blocage (3) selon la revendication 9, dans laquelle une transition (20) entre l'épaulement (19) et le corps (16) est réalisée sous forme biseautée, notamment conique.

11. Broche de blocage (3) selon la revendication 6, dans laquelle la section de verrouillage (18) est réalisée sous la forme d'une tête sphérique.

12. Ensemble contenant un réservoir de fluide (1) selon au moins l'une quelconque des revendications 1 à 5 et une broche de blocage (3) selon au moins l'une quelconque des revendications 6 à 11.

13. Ensemble selon la revendication 12, dans lequel le composant de véhicule (2) est un groupe hydraulique pour générer la pression de freinage hydraulique dans un système de freinage hydraulique de véhicule automobile, notamment un maître-cylindre de frein.
